# EUROPEAN PATENT APPLICATION

(11) **EP 4 585 839 A1**
(43) Date of publication of application: **16.07.2025**
(21) Application number: 23862474.6
(22) Date of filing: 07.09.2023
(51) Int. Cl.: F16K 37/00

(54) **ELECTRIC VALVE AND ASSEMBLY METHOD**

(30) Priority: 07.09.2022 CN 202211091072; 07.09.2022 CN 202211091093; 07.09.2022 CN 202211091648
(71) Applicant: ZHEJIANG SANHUA AUTOMOTIVE COMPONENTS CO., LTD., Hangzhou, Zhejiang 310018 (CN)
(72) Inventor: XU, Chenhui, Hangzhou, Zhejiang 310018 (CN); PAN, Yiyuan, Hangzhou, Zhejiang 310018 (CN); YUAN, Ke, Hangzhou, Zhejiang 310018 (CN); ZHANG, Rongjun, Hangzhou, Zhejiang 310018 (CN)
(74) Representative: Maikowski & Ninnemann Patentanwälte Partnerschaft mbB
(86) International application number: PCT/CN2023/117474
(87) International publication number: WO 2024/051780

(57) **Abstract**

Disclosed is an electric valve, comprising a first valve body (401) and a second valve body (402), the first valve body (401) and the second valve body (402) being of a split structure. The second valve body (402) comprises a first opening portion (42), wherein the first opening portion (42) is provided with a mounting cavity (423) which has an opening facing a housing; at least part of a first sensing device (50) is located in the mounting cavity (423); the second valve body (402) is fixedly connected or limitedly connected to the housing (10); and when the first sensing device is replaced, the second valve body and the housing can be separately disassembled, and then the first sensing device is disassembled, so as to facilitate the simplifying of the step of replacing the first sensing device. Further disclosed is an assembly method for the electric valve.

## Description

The present application claims the priorities to the following Chinese Patent Applications:
1. Chinese Patent Application No. 202211091072.2, filed with the China National Intellectual Property Administration on September 7, 2022,
2. Chinese Patent Application No. 202211091093.4, filed with the China National Intellectual Property Administration on September 7, 2022, and
3. Chinese Patent Application No. 202211091648.5, filed with the China National Intellectual Property Administration on September 7, 2022,
the entire disclosures of which are incorporated herein by reference.

### FIELD

The present application relates to the technical field of fluid control, and in particular to an electric valve and an assembly method.

### BACKGROUND

In an air conditioning system or a thermal management system, in order to improve the flow control precision of a working medium, an electric valve is usually used as a throttling element, and the electric valve is provided with a first sensing device for detecting a temperature and/or a pressure, and the first sensing device is electrically connected to an electric control board of the electric valve, or electrically connected to an ECU (Electronic Control Unit) directly. When the first sensing device needs for parameters-setting or maintenance during use, it is necessary to open a housing that accommodates the electric control board, take the electric control board out and then remove the first sensing device. Therefore, the replacement process of the first sensing device is cumbersome.

### SUMMARY

An object of the present application is to provide an electric valve and an assembly method to simplify the replacement process of a first sensing device.

To achieve the above object, the following technical solutions are provided according to an embodiment of the present application. The electric valve includes a first sensing device, a valve body and a valve component. The valve body includes a first valve body and a second valve body that are formed separately, and the first valve body is connected to the second valve body in a fixed or limited manner or abuts against the second valve body. At least a part of the valve component is located in the first valve body, the electric valve includes a housing, and at least another part of the valve component is located in the housing. The second valve body is connected to the housing in a fixed or limited manner, and the second valve body includes a first opening portion. The first opening portion is provided with a mounting chamber, an opening of the mounting chamber is oriented towards the housing, and at least a part of the first sensing device is located in the mounting chamber. The electric valve is provided with a first passage and a second passage, the second passage is located in the first valve body, and the first passage is located in the second valve body. The first sensing device is used to detect a temperature and/or a pressure of a working medium in the first passage.

An assembly method for assembling an electric valve is provided according to another embodiment of the present application. The electric valve includes a housing, a valve component, a valve body, a first sensing device and a control portion, the valve body includes a first valve body and a second valve body that are formed separately, and the second valve body includes a first opening portion. The assembly method includes the following steps:
disposing a part of the first sensing device in a mounting chamber of the first opening portion, and fixing the first sensing device to the second valve body;
mounting a part of the valve component in a chamber of the housing, locating the first valve body on the valve component in an axial direction of the valve component, fix the housing and the first valve body to press the valve component against the first valve body and the housing; and
orienting a sensor side of the second valve body on which the first sensing device is mounted towards the housing, assembling the second valve body and the housing, so that another part of the first sensing device is located in the housing, and the first sensing device and the control portion are electrically connected to each other and/or in signal connection with each other.

According to the embodiment of the present application, the valve body includes the first valve body and the second valve body that are formed separately. The second valve body includes the first opening portion that is provided with the mounting chamber, and the opening of the mounting chamber is arranged towards the housing. At least a part of the first sensing device is located in the mounting chamber, and the second valve body and the housing are connected in a fixed or limited manner. When replacing the first sensing device, the second valve body and the housing can be independently removed, and then the first sensing device is removed, which simplifies the replacement process of the first sensing device.

### BRIEF DESCRIPTION OF THE DRAWINGS

FIG. 1 is a schematic perspective view of an electric valve according to an embodiment;
FIG. 2 is another schematic perspective view of the electric valve according to the embodiment;
FIG. 3 is a schematic sectional structural view of the electric valve according to the embodiment;
FIG. 4 is a schematic partially exploded structural view of the electric valve according to the embodiment;
FIG. 5 is a schematic view showing a connection structure between a first valve body and a second valve body of the electric valve according to the embodiment;
FIG. 6 is a schematic view showing a limiting structure between the first valve body and the second valve body of the electric valve according to the embodiment;
FIG. 7 is a schematic view of the first valve body of the electric valve according to the embodiment;
FIG. 8 is a schematic view of the second valve body of the electric valve according to the embodiment;
FIG. 9 is a schematic partially enlarged view of a portion A in FIG. 3 according to the embodiment;
FIG. 10 is a schematic partially enlarged view of the portion A in FIG. 3 according to another embodiment;
FIG. 11 is a schematic view of a first sensing device of the electric valve according to the embodiment;
FIG. 12 is a schematic view showing a connection structure between the first sensing device and a valve body of the electric valve according to the embodiment;
FIG. 13 is a schematic partially exploded structural view of the electric valve according to the embodiment;
FIG. 14 is an enlarged view of a portion B in FIG. 13;
FIG. 15 is schematic partially exploded structural view of the electric valve according to the embodiment;
FIG. 16 is an enlarged view of a portion C in FIG. 13;
FIG. 17 is a schematic view showing the connection structure of a position detector and an electric connection portion of the electric valve according to the embodiment;
FIG. 18 is a schematic partially sectional view of the electric valve according to the embodiment;
FIG. 19 is schematic partially sectional view of the electric valve according to the embodiment;
FIG. 20 is schematic perspective structural view of the electric valve according to the embodiment;
FIG. 21 is an enlarged view of a portion D in FIG. 20; and
FIG. 22 is schematic structural view of the electric valve according to the embodiment.

**Reference numerals:**

| | | | |
|---|---|---|---|
| 1 | electric valve, | 1a | control portion, |
| 10 | housing, | 101 | first matching portion, |
| 101a | first surface, | 102 | second fixation portion, |
| 1021 | limiting step, | 1021a | limiting wall, |
| 131 | through hole portion, | 131a | through hole, |
| 131b | step wall, | 132 | extension portion, |
| 132a | abutment wall, | 133 | rib portion, |
| 134 | positioning portion, | 135 | positioning hole, |
| 15 | first chamber, | 151 | bottom wall, |
| 152 | side wall, | 16 | second chamber, |
| 20 | stator assembly, | 201 | fourth pin portion, |
| 202 | valve core, | 203 | rotor assembly, |
| 21 | valve component, | 211 | valve port, |
| 212 | inlet, | 213 | outlet, |
| 214 | second passage, | 30 | electric control portion, |
| 40 | valve body, | 401 | first valve body, |
| 4011 | third opening portion, | 402 | second valve body, |
| 4021 | first step portion, | 4022 | second step portion, |
| 4022a | second step surface, | 4023 | first bolt, |
| 4024 | second bolt, | 4025 | third bolt, |
| 403 | first protrusion portion, | 403a | first top wall, |
| 4031 | first recess portion, | 4031b | first bottom wall, |
| 404 | second protrusion portion, | 404a | second top wall, |
| 4041 | second recess portion, | 4041b | second bottom wall, |
| 405 | connection hole, | 406 | abutment portion, |
| 407 | weight reduction groove, | 408 | limiter, |
| 409 | limiting groove, | 41 | first passage, |
| 42 | first opening portion, | 421 | first opening, |
| 422 | second opening, | 423 | mounting chamber, |
| 50 | first sensing device, | 501 | connection portion, |
| 502 | sensor, | 51 | first seal, |
| 52 | second seal, | 53 | first groove portion, |
| 531 | first groove, | 54 | second groove portion, |
| 541 | second groove, | 55 | first wall, |
| 56 | second wall, | 57 | lug, |
| 58 | fixation member, | 60 | position detector, |
| 601 | first pin portion, | 602 | first positioning portion, |
| 70 | electric connection portion, | 71 | first connector, |
| 711 | fixation portion, | 712 | insertion opening, |
| 713 | second matching portion, | 714 | second pin portion, |
| 715 | second positioning portion, | 716 | third pin portion, |
| 72 | second connector, | 721 | first positioning hole, |
| 722 | second positioning hole, | 80 | interface port portion, |
| 81 | fifth pin portion. | | |

### DETAILED DESCRIPTION OF THE EMBODIMENTS

The present application is further illustrated hereinafter in conjunction with the drawings and specific embodiments.

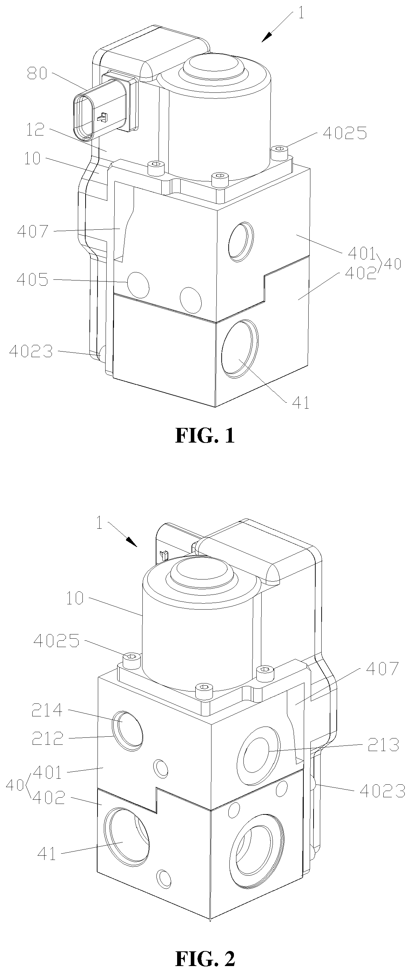

Referring to FIG. 1, 2 and 3, an electric valve 1 includes a control portion 1a, a valve body 40, a valve component 21 and a stator assembly 20. The stator assembly 20 is fixed to the control portion 1a, and is electrically connected to the control portion 1a and/or in a signal connection with the control portion 1a. The control portion 1a can be electrically connected to an exterior and/or in a signal connection with the exterior. The stator assembly 20 is provided on a periphery of the valve component 21, and is fixed to the valve body 40. A part of the valve component 21 is located in the valve body 40. The electric valve 1 further includes a first sensing device 50 that is fixed to the valve body 40. The first sensing device 50 is electrically connected to the control portion 1a and/or in a signal connection with the control portion 1a, and can detect a temperature and/or a pressure of a working medium.

The electric valve 1 includes an inlet 212, an outlet 213, a first passage 41 and a second passage 214. The second passage 214 is in communication with the inlet 212 and the outlet 213. The first passage 41 is arranged farther away from the stator assembly 20 than the inlet 212 and the outlet 213 in an axial direction of the stator assembly 20. The valve body 40 includes a first valve body 401 and a second valve body 402. The inlet 212, the outlet 213 and the second passage 214 are all located in the first valve body 401, and the inlet 212 and the outlet 213 are respectively located on two adjacent walls of the first valve body 401. The first passage 41 is located in the second valve body 402, and the first passage 41 and the second passage 214 are not in communication with each other.

The first valve body 401 and the second valve body 402 are separately formed. Compared with an integrated valve body 40, the first valve body 401 and the second valve body 402 that are separately formed have a smaller size, which can be manufactured of small-size raw materials. Therefore, the raw materials can be flexibly selected, thereby saving raw materials and reducing the cost. The first valve body 401 is made of metal, and a density of the second valve body 402 is lower than a density of the first valve body 401. As such, a weight of the electric valve 1 can be reduced. Furthermore, it is beneficial to reduce the transportation cost because of the lightweight valve body 40. Specifically, the second valve body 402 may be made of metal or plastic. In the embodiment, the second valve body 402 is made of plastic, and is formed by injection molding. In this way, the materials are largely saved while the performance is ensured, which improves the utilization rate of the materials and reduces the cost. Preferably, the material of the second valve body includes Polyphenylene Sulfide (PPS), Polyamide 66 (PA66), and the like.

The axial direction of the stator assembly 20 is defined as a reference direction. The valve component 21 extends through the first valve body 401 in the reference direction, and the second valve body 402 is arranged farther away from the valve component 21 than the first valve body 401. A part of the first sensing device 50 is located in the second valve body 402. In an embodiment, an included angle is formed between an axial direction of the first sensing device 50 and the reference direction. Thus, the first valve body 401 and the second valve body 402 are assembled in different directions. In an assembly process, the first sensing device 50 is mounted on the second valve body 402 first, and then the first valve body 401, the second valve body 402, and the control portion 1a are assembled in sequence. It is not necessary to mount the first sensing device 50 to the valve body 40 from an electric control side, thereby simplifying the assembly process. In the embodiment, the axial direction of the first sensing device 50 is perpendicular to the reference direction. In another embodiment, the axial direction of the first sensing device 50 is parallel to the reference direction, that is, a mounting direction of the first sensing device 50 and a mounting direction of the stator assembly 20 are in parallel. With such arrangement, a height of the device in one direction can be reduced, so as to be adaptive to various environments.

The valve component 21 includes a valve core 202 and a rotor assembly 203. The valve component 21 is provided with a valve port 211 that is located in the second passage 214. The valve core 202 is movable and can regulate an opening degree of the valve port 211. The first valve body 401 includes a third opening portion 4011, and an opening of the third opening portion 4011 is opened in a direction opposite to the second valve body 402. A part of the valve component 21 is located in the third opening portion 4011.

The control portion 1a includes an electric control portion 30 and a housing 10. The housing 10 is provided with a first chamber 15, and the electric control portion 30 is located in the first chamber 15.

The first valve body 401 and the second valve body 402 may be connected in a fixed or limited manner or may abut against with each other. The first valve body 401 and the second valve body 402 may be merely connected to each other, or may be connected to each other while being connected to the housing 10, respectively, which improves the mounting stability of the first valve body 401 and the second valve body 402. Some connection manners are listed herein. According to one of the connection manners, one side of the first valve body 401 abuts against the housing 10, and the other side of the first valve body 401 abuts against the second valve body 402. The second valve body 402 is fixed to the housing 10, and the first valve body 401 is limited by abutting against the second valve body 402 and the housing 10. According to another one of the connection manners, the first valve body 401 is fixed to the housing 10, the second valve body 402 is fixed to the housing 10, and the first valve body 401 and the second valve body 402 abut against with each other. According to yet another one of the connection manners, the first valve body 401 is fixed to the housing 10, the second valve body 402 is fixed to the housing 10, and the first valve body 401 and the second valve body 402 are fixed to each other. Certainly, a connection manner for mounting in practice may include but is not limited to the above connection manners, as long as the fixation is achieved.

Certainly, the first valve body 401 and the second valve body 402 may not be connected to each other or abut against with each other. According to yet another one of the connection manners, the first valve body 401 is fixed to the housing 10, and the second valve body 402 is fixed to the housing 10, while a gap is provided between the first valve body 401 and the second valve body 402. In a case that first valve body 401 and the second valve body 402 is in contact with each other, there is still a tiny gap therebetween on the microscopic scale. Corrosive matters from the exterior may easily stay in the tiny gap, leading to corrosion. In a case that that the first valve body 401 and the second valve body 402 are not in contact with each other, the gap between them is relatively large, which greatly reduces the possibility of accumulation of the corrosive matters. Therefore, corrosion is less likely to occur if the first valve body 401 and the second valve body 402 are not in contact with each other. Since a part of the valve component 21 extends through the first valve body 401 in the reference direction and two sides of first valve body 401 in the reference direction are limited by abutting the housing 10 and the second valve body 402, respectively, it is hardly for the valve component 21 to be offset. It should be noted that, the fixation described hereinabove is a fixed connection manner that is detachable, such as a connection by a bolt and the like. In the embodiment, the fixations between the first valve body 401 and the housing 10 and between the second valve body 402 and the housing 10 may include but are not limited to this connection manner in practice.

Referring to FIGs. 2, 4 and 5, the electric valve 1 includes a first bolt 4023 and a second bolt 4024. The axial direction of the first sensing device 50 is defined as a first direction, the first direction is perpendicular to the reference direction. The first bolt 4023 is arranged in the first direction, and a part of the first bolt 4023 is located in a first hole (not shown in the drawings) of the housing 10. The first bolt 4023 extends through the housing 10, and an end portion of the first bolt 4023 is in a threaded connection with the second valve body 402 to fix the second valve body 402 to the housing 10. The first direction is perpendicular to the axial direction of the stator assembly 20. A third bolt 4025 is arranged in the reference direction or the first direction, and a part of the third bolt 4025 is located in a second hole (not shown in the drawings) of the housing 10. The third bolt 4025 extends through the housing 10, and an end portion of the third bolt 4025 is in a threaded connection with the first valve body 401 to fix the first valve body 401 to the housing 10. In other embodiments, the first bolt 4023, the second bolt 4024 and the third bolt 4025 may be other types of components for fixation, which may include but are not limited to the above structures in practice.

The above connection manners are all detachable, which facilitates of inspection and replacement of internal components, thereby improving the service life of the electric valve 1. In practice, the connection manners may include but are not limited to the above connection manners. In the embodiment, only a fixation manner in which the third bolt 4025 is connected to the housing 10 and the first valve body 401, respectively, in the reference direction is shown.

At least one side of the first valve body 401 and at least one side of the second valve body 402 abut against and are fixed to the housing 10. The valve body 40 is provided with a weight reduction groove 407. In the embodiment, the weight reduction groove 407 is located on a side of the first valve body 401 abutting against the housing 10 in the first direction. A direction perpendicular to the reference direction and the first direction is defined as a second direction, and the weight reduction groove 407 extends through the valve body 40 in the second direction. With the weight reduction groove 407, the valve body 40 can avoid a part of the housing 10 protruding towards the first valve body 401, and the weight of the electric valve 1 is reduced. Furthermore, the housing 10 is integrally formed by injection molding with injection molding materials, and thus deforms to some extent after being cooled, and an abutting area between the first valve body 401 and the housing 10 is reduced, so that the valve body 40 and the housing 10 abut against with each other more closely. The above connection manners are all detachable, which facilitates of inspection and replacement of the internal components, thereby improving the service life of the electric valve 1. In practice, the connection manners may include but are not limited to the above connection manners.

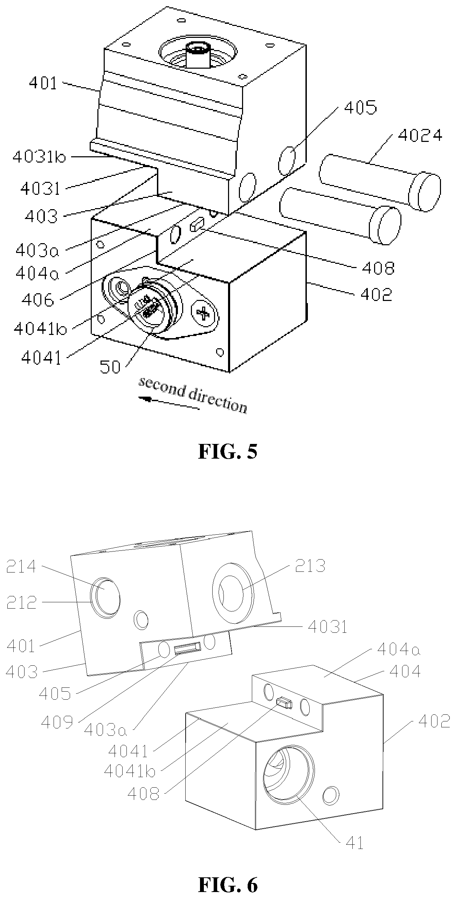

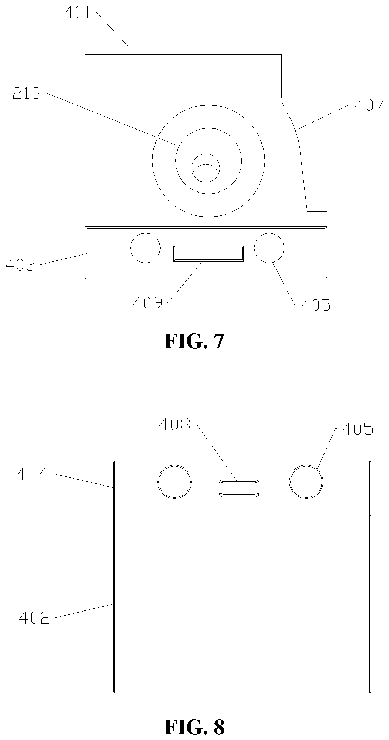

Referring to FIGs. 5, 6, 7 and 8, the first valve body 401 includes a first protrusion portion 403, and the first protrusion portion 403 includes a first top wall 403a. The first protrusion portion 403 protrudes towards the second valve body 402 relative to other parts of the first valve body 401, and the first top wall 403a is located on a protrusion side of the first protrusion portion 403. A first recess portion 4031 is formed on the first valve body 401 relative to the first protrusion portion 403, and the first recess portion 4031 includes a first bottom wall 4031b. The second valve body 402 includes a second protrusion portion 404, and the second protrusion portion 404 includes a second top wall 404a. The second protrusion portion 404 protrudes towards the first valve body 401 relative to other parts of the second valve body 402, and the second top wall 404a is located on a protrusion side of the second protrusion portion 404. A second recess portion 4041 is formed on the second valve body 402 relative to the second protrusion portion 404, and the second recess portion 4041 includes a second bottom wall 4041b.

At least a part of the first protrusion portion 403 is located at the second recess portion 4041, and the first top wall 403a abuts against the second bottom wall 4041b. At least a part of the second protrusion portion 404 is located at the first recess portion 4031, and the second top wall 404a abuts against the first bottom wall 4031b. The first protrusion portion 403 and the second protrusion portion 404 each includes an abutment portion 406, and the abutment portions 406 of the first protrusion portion 403 and the second protrusion portion 404 abut against with each other. In the embodiment, the abutment portion 406 of the first valve body 401 includes at least the first top wall 403a, the first bottom wall 4031b, and a wall of the first protrusion portion 403 facing the second protrusion portion 404. The abutment portion 406 of the second valve body 402 includes at least the second top wall 404a, the second bottom wall 4041b, and a wall of the second protrusion portion 404 facing the first protrusion portion 403.

The two walls of the first protrusion portion 403 and the second protrusion portion 404 that face each other can limit the first protrusion portion 403 in the second direction. The abutment portions 406 of the first protrusion portion 403 and the second protrusion portion 404 abut against with each other, and thus the first protrusion portion 403 and the second protrusion portion 404 can limit to each other in the second direction. Furthermore, compared with a case that the first valve body 401 and the second valve body 402 abut against with each other only through one surface, by providing the first protrusion portion 403 and the second protrusion portion 404, it can reduce the requirements for surface flatness of the first valve body 401 and the second valve body 402, thereby reducing the processing difficulty,.

Referring to FIGs. 6, 7 and 8, the electric valve 1 includes a limiter 408 and a limiting groove 409 that are respectively located on one and the other of a side of the first protrusion portion 403 and a side of the second protrusion portion 404 that face with each other. At least a part of the limiter 408 is located in the limiting groove 409, and the limiter 408 can limit the first protrusion portion 403 and the second protrusion portion 404 relative to each other in the reference direction. In a case that the limiting groove 409 is located on the first protrusion portion 403, the limiter 408 is connected to the second protrusion portion 404 in a fixed or limited manner, or the limiter 408 is integrally formed on the second protrusion portion 404. In a case that the limiting groove 409 is located on the second protrusion portion 404, the limiter 408 is connected to the first protrusion portion 403 in a fixed or limited manner, or the limiter 408 is integrally formed on the first protrusion portion 403. By providing the limiter 408, the first protrusion portion 403 and the second protrusion portion 404 are less likely to shake in the reference direction. In the embodiment, the limiter 408 is a key that is integrally formed on the first protrusion portion 403 or the second protrusion portion 404. In other embodiments, the connection manner may include but is not limited to the above connection structure.

Each of the first protrusion portion 403 and the second protrusion portion 404 is provided with a connection hole 405, which is a through hole. The electric valve 1 includes the second bolt 4024, which is used to fix the first valve body 401 and the second valve body 402 with each other, or fix the first valve body 401 and the second valve body 402 on other devices. The second bolt 4024 extends through the connection holes 405 of the first protrusion portion 403 and the second protrusion portion 404 in the second direction, and is in clearance fit with at least a part of a wall of each of the connection holes 405 of the first protrusion portion 403 and the second protrusion portion 404. In the embodiment, the second bolt 4024 includes a bolt. Two bolts are provided, and are spaced apart in the first direction, and each of the two bolts extends through the first protrusion portion 403 and the second protrusion portion 404 in the second direction. A thread portion is provided at an end portion of each bolt and extends out of the first valve body 401 or the second valve body 402 so as to fix the entire electric valve 1 on other desired components. The first protrusion portion 403 and the second protrusion portion 404 facilitate of the connection and fixation. Furthermore, one of the first protrusion portion 403 and the second protrusion portion 404 presses the other one, which enhances the connection strength.

During assembly, the side of the first valve body 401 is in contact with the housing 10, and the first valve body 401 moves in an axial direction of the valve component 21, so that the part of the valve component 21 enters the first valve body 401. The relative position between the first valve body 401 and the valve component 21 is fixed by the third bolt 4025. Then, the first sensing device 50 is mounted into the second valve body 402 in the first direction, and the second valve body 402 abuts against the housing 10 in the first direction to be in cooperation with the housing 10, so as to ensure that a part of the first sensing device 50 passes through the housing 10 and is electrically connected to the electric control portion 30. The second valve body 402 matches with and abutted against the first valve body 401, thereby reducing the mounting difficulty of the components. The relative position between the second valve body 402 and the housing 10 is fixed by the first bolt 4023. Alternatively, the first valve body 401 may be connected to the second valve body 402 by the second bolt 4024 in replacement of the first bolt 4023. In that case, the relative position among the first valve body 401, the second valve body 402 and the housing 10 has been fixed, and the second bolt 4024 extends through the first protrusion portion 403 and the second protrusion portion 404, so as to fix the entire electric valve 1 to other desired components.

To mount the first sensing device 50, the valve body 40 includes a first opening portion 42 and a communication passage (not shown in the drawings), and the first opening portion 42 is provided with a mounting chamber 423. The first opening portion 42 is provided with a first opening 421 and a second opening 422 that are opposite to each other, and the first opening 421 and the second opening 422 are respectively located on two sides of the mounting chamber 423. The first opening 421 and the second opening 422 are in communication with the mounting chamber 423. The first opening 421 is arranged towards the electric control portion 30. The first sensing device 50 can be mounted from the first opening 421, and a part of the first sensing device 50 is located in the mounting chamber 423. In the embodiment, the first opening portion 42 is located at the second valve body 402. In addition, the first sensing device 50 includes a temperature sensor 502 and a pressure sensor (not shown in the drawings). In other embodiments, the first sensing device 50 may only include the temperature sensor 502 or the pressure sensor. The second opening 422 and the first opening 421 are opened towards opposite directions. A chamber formed on the first opening portion 42 is in communication with the communication passage (not shown in the drawings) through the second opening 422, and the communication passage (not shown in the drawings) is in communication with the first passage 41 for detecting the temperature and/or the pressure of the working medium in the first passage 41.

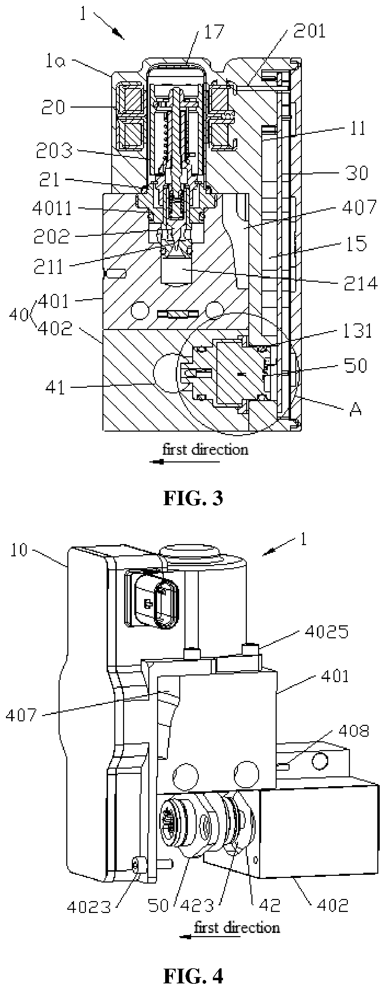

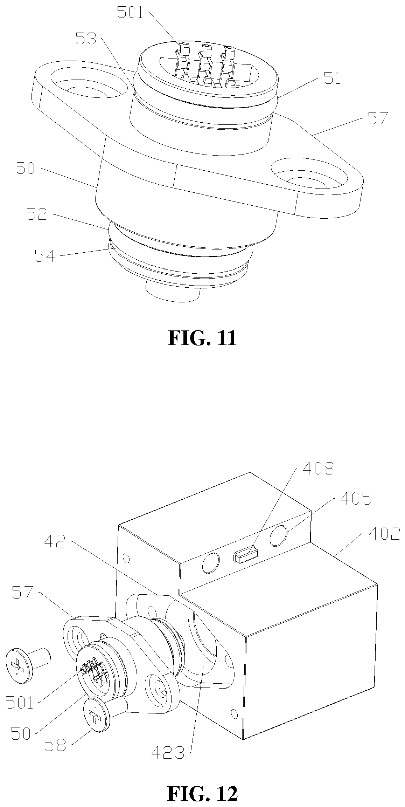

Referring to FIGs. 3, 9 and 11, specifically, the valve body 40 includes a first step portion 4021 and a second step portion 4022. In the axial direction of the first sensing device 50, the first step portion 4021 is closer to the first passage 41 than the second step portion 4022. A wall that forms the first opening portion 42 includes at least a part of a wall of the first step portion 4021 and at least a part of a wall of the second step portion 4022. The electric valve 11 includes a second seal 52. One side of the second seal 52 abuts against the wall of the first opening portion 42, and the other side of the second seal 52 abuts against a wall of the first sensing device 50, so as to seal a gap between the first opening portion 42 and the first sensing device 50 to reduce the leakage risk of the working medium through the gap.

The electric valve 1 includes a second groove portion 54 and a second wall 56. The second groove portion 54 is provided with a second groove 541, and at least a part of the second seal 52 is located in the second groove 541. The wall that forms the first opening portion 42 includes the second wall 56, and the second wall 56 is arranged towards a part of a wall of the second groove portion 54. One side of the second seal 52 abuts against the wall of the second groove portion 54, and the other side of the second seal 52 abuts against the second wall 56. In the first direction, the second groove portion 54 and the second wall 56 are located between the first step portion 4021 and the second step portion 4022. In a case that the second groove portion 54 is located on the first sensing device 50, the second groove portion 54 is circumferentially recessed around the first sensing device 50. In a case that the second groove portion 54 is located on the second valve body 402, the second groove portion 54 is circumferentially recessed around the second valve body 402. The second groove portion 54 is provided on the first sensing device 50 or the second valve body 402, and a part of the second seal 52 is located in the second groove portion 54. As such, the second seal 52 can be assembled in advance, and then other components are assembled, which makes the assembly more convenient.

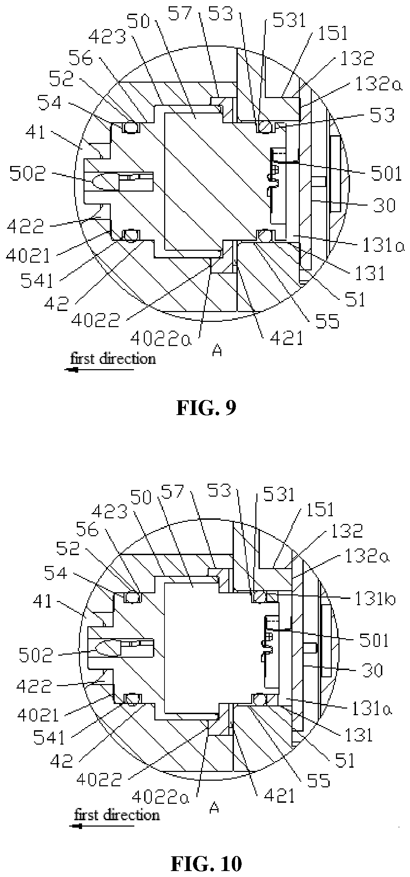

Referring to FIGs. 9, 11 and 12, the first sensing device 50 includes a lug 57, which protrudes in a radial direction of the first sensing device 50. The lug 57 may be annular or of other shapes in the axial direction of the first sensing device 50, and may be of a regular or irregular shape. The second step portion 4022 includes a second step surface 4022a, and at least a part of the lug 57 abuts against the second step surface 4022a. The electric valve 1 includes a fixation member 58, which can limit the first sensing device 50 in the axial direction thereof, so that at least a part of the lug 57 abuts against the wall of the first opening portion 42 to prevent the first sensing device 50 from being detached. In the embodiment, the fixation member 58 is a bolt that extends through the lug 57 in the first direction. An end portion of the bolt includes a threaded segment that is in a threaded connection with the second valve body 402, so that the first sensing device 50 tightly abuts against the second step surface 4022a. At least two bolts are provided. In other embodiments, the fixation member 58 may be a nut. In a case that the fixation member 58 is a nut, a threaded segment of the nut is located on a peripheral wall of the nut, and the nut is in a threaded connection with the wall of the first opening portion 42, so that the first sensing device 50 tightly abuts against the second step surface 4022a. This device can be quickly mounted or removed, and the mounting process is simplified, thereby improving the convenience of mounting and removal. It should be noted that, the first sensing device 50 may abut against or be in clearance fit with a surface of the first step portion 4021. With the fixation member 58, the first sensing device 50 can not only be fixed, but also abut against the second step surface 4022a to reduce the leakage risk of the working medium to some extent.

Referring to FIGs. 9, 10, 13 and 14, the electric valve 1 includes a through hole portion 131. The through hole portion 131 is provided with a through hole 131a, and the through hole portion 131 includes at least a part of a wall that forms the through hole 131a. At least a part of an opening of the through hole 131a is aligned with at least a part of an opening of the first opening portion 42. In the embodiment, at least a part of the opening of the through hole 131a is aligned with the first opening 421 of the first opening portion 42. In the first direction, a part of the first sensing device 50 is located in the through hole 131a. The first sensing device 50 includes a connection portion 501, which is located on a side of the first sensing device 50 close to the electric control portion 30 in the first direction. The first sensing device 50 is electrically connected to the electric control portion 30 through the connection portion 501, which improves the reliability of the electrical connection between the first sensing device 50 and the electric control portion 30. In the embodiment, the electric control portion 30 includes a first circuit board. In the embodiment, the connection portion 501 is a metal spring contact. The first sensing device 50 abuts against a solder pad of the first circuit board through the metal spring contact, so that the first sensing device 50 is electrically connected to the first circuit board. Other implementations may include but are not limited to the above structure.

The electric valve 1 includes an extension portion 132 that extends towards the electric control portion 30 in the first direction, and at least a part of the through hole portion 131 is located at the extension portion 132. In the embodiment, the extension portion 132 is annular. With the extension portion 132, it is beneficial to increase a height of the through hole portion 131 in the first direction, so that a sealing path is increased, thereby improve the sealing performance and reducing the leakage risk. The electric valve 1 includes a first seal 51, and the first seal 51 is arranged farther away from the first passage 41 than the second seal 52 in the first direction. In an embodiment, one side of the first seal 52 abuts against the housing 10, and the other side of the first seal 52 abuts against the first sensing device 50. In the embodiment, the first seal 51 abuts against a wall of the through hole portion 131. Specifically, at least a part of the through hole portion 131 is formed on the extension portion 132. At least a part of the one side of the first seal 51 abuts against a wall of the extension portion 132 and the other side of the first seal 51 abuts against the wall of the first sensing device 50 so as to seal a gap between the through hole portion 131 and the first sensing device 50, and thus it is less likely for moisture and the like to enter the electric control portion 30 through the gap. In other embodiments, a position where the first seal 52 abuts against the housing 10 includes but is not limited to the wall of the through hole portion 131, and may be a side wall of the housing 10 close to the second valve body 402 that serves as a part of a sealing surface.

There are at least two implementations of the sealing manner of the first seal 51. According to one implementation, a sealing surface formed between the through hole portion 131 and the first seal 51 is located at an outer circumferential side of the first seal 51 in the radial direction of the first sensing device 50. In the radial direction of the first sensing device 50, one side of the first seal 51 abuts against the wall of the through hole portion 131, and the other side of the first seal 51 abuts against the first sensing device 50. The first seal 51 may be assembled on the first sensing device 50 in advance, and thus it is less likely that the first seal 51 is detached or not assembled in place, thereby ensuring the sealing performance of the first seal 51.

According to another implementation, the through hole portion 131 includes a step portion (not shown in the drawings) and a step wall 131b. In this implementation, the step portion is annular and protrudes towards an axis of the through hole portion 131 relative to the through hole portion 131. The step wall 131b is located at the step portion (not shown in the drawings), and is arranged farther away from the electric control portion 30 than the step portion. In the axial direction of the first sensing device 50, the first seal 51 is located between the step wall 131b and the first sensing device 50, one side of the first seal 51 abuts against the step wall 131b, and the other side of the first seal 51 abuts against the first sensing device 50. The first seal 51 is located between the first sensing device 50 and the step wall 131b in the axial direction of the first sensing device 50, thereby decreasing a diameter of the through hole 131a formed on the through hole portion 131 and lowering the requirement for processing precision of the through hole 131a.

The housing 10 further includes a rib portion 133, and the rib portion 133 is arranged closer to the electric control portion 30 than a bottom wall 151. The housing 10 includes a side wall 152, and a wall that forms the first chamber 15 includes at least a part of the side wall 152. One side of the rib portion 133 is connected to the extension portion 132, and the other side of the rib portion 133 is connected to the side wall 152. In the embodiment, the rib portion 133 serves as a reinforcement rib. With the rib portion 133, the strength of the extension portion 132 is enhanced, and the extension portion 132 is less likely to deform. Other embodiments may include but are not limited to the above structure. The electric valve 1 includes a positioning portion 134. The positioning portion 134 may be fixedly connected to the extension portion 132 and/or the rib portion 133, or may be integrally formed on the extension portion 132 and/or the rib portion 133. In the embodiment, the positioning portion 134 is integrally formed on the extension portion 132 and/or the rib portion 133 by injection molding. The electric control portion 30 is provided with a positioning hole 135, and a part of the positioning portion 134 is located in the positioning hole 135. The positioning portion 134 is connected to the electric control portion 30 in a fixed or limited manner. In this case, the positioning portion 134 guides and assists to position the electric control portion 30, thereby improving the mounting stability of the electric control portion 30. The connection between the positioning portion 134 and the electric control portion 30 may include welding, riveting and the like, and may include but is not limited to the above connection manners in practice.

Referring to FIGs. 3, 9 and 14, the electric valve 1 includes a first groove portion 53 and a first wall 55. The first groove portion 53 is provided with a first groove 531, and at least a part of the first seal 51 is located in the first groove 531. The wall of the through hole portion 131 includes the first wall 55, and the first wall 55 is arranged to face a part of a wall of the first groove portion 53. One side of the first seal 51 abuts against the wall of the first groove portion 53, and the other side of the first seal 51 abuts against the first wall 55. The first groove portion 53 is located on the first sensing device 50 or the housing 10, and at least the part of the first seal 51 is located in the first groove 531. In a case that the first groove portion 53 is formed on the first sensing device 50, the first groove portion 53 is circumferentially recessed around the first sensing device 50. In a case that the first groove portion 53 is formed on the housing 10, the first groove portion 53 is circumferentially recessed around the housing 10. In the embodiment, the first groove portion 53 is formed on the housing 10, and at least a part of the first groove portion 53 is located in the extension portion 132. The first groove portion 53 is provided on the first sensing device 50 or the extension portion 132, and at least a part of the first seal 51 is located in a chamber formed on the first groove portion 53. As such, the first seal 51 can be assembled in advance, and then other components are assembled, which makes the assembly more convenient.

The wall that forms the first chamber 15 includes at least a part of the bottom wall 151, and the bottom wall 151 is arranged closer to the valve body 40 than the electric control portion 30. The electric control portion 30 is located on a side of the extension portion 132 away from the valve body 40. The extension portion 132 includes an abutment wall 132a that is located on the side of the extension portion 132 away from the second valve body 402. The abutment wall 132a is arranged closer to the electric control portion 30 than the bottom wall 151, so as to form a structure that protrudes inwards relative to the first chamber 15. The abutment wall 132a includes at least a part of a wall circumferentially surrounding the through hole portion 131, or may include more walls of the housing 10. At least a part of the electric control portion 30 abuts against the abutment wall 132a, and then the positioning portion 134 is fixed to the electric control portion 30, thereby facilitating the stable mounting of the electric control portion 30.

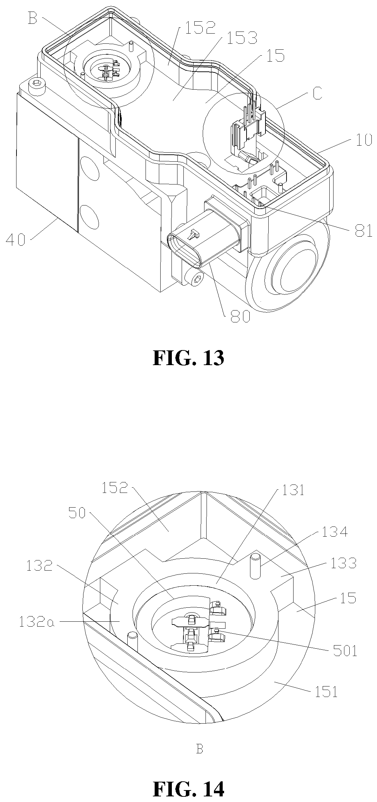

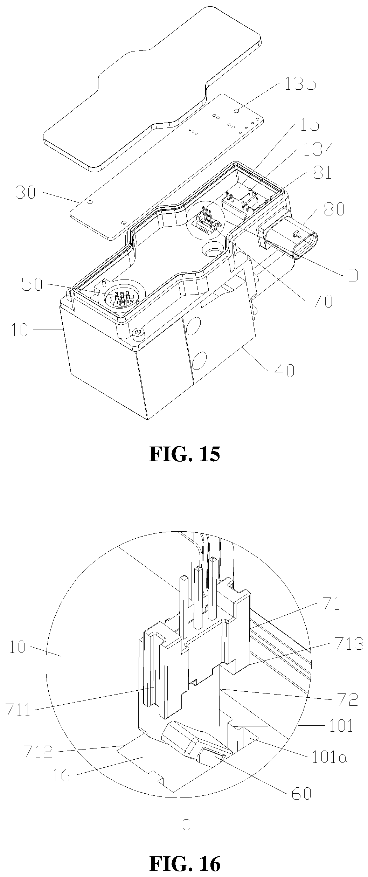

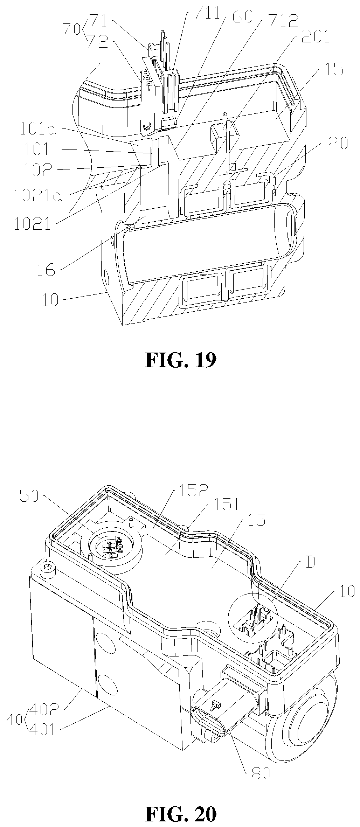

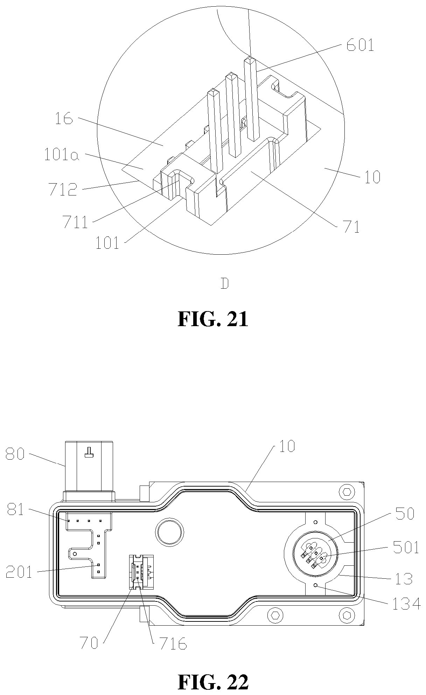

Referring to FIG. 14 to FIG. 21, the housing 10 is provided with a second chamber 16. The second chamber 16 is located on at least one side of the periphery of the valve component 21 in a radial direction thereof, and the second chamber 16 is in communication with the first chamber 15. The electric valve 1 includes a position detector 60 and an electric connection portion 70. A first connector 71 is electrically connected to the position detector 60 and/or in a signal communication with the position detector 60 through a second connector 72. The position detector 60 can detect a rotation of the rotor assembly 203 and form a feedback signal, and the electric control portion 30 can collect the feedback signal and determine an operation status of the electric valve 1. In the embodiment, the second connector 72 includes a second circuit board, and the position detector 60 can be electrically connected to the electric control portion 30 through the second circuit board. The position detector 60 is mounted in the second chamber 16 through the electric connection portion 70. A wall that forms the second chamber 16 includes a bottom wall of the second chamber 16. At least a part of the rotor assembly 203 is located on one side of the bottom wall of the second chamber 16, and the position detector 60 is located on the other side of the bottom wall of the second chamber 16. The position detector 60 is arranged closer to the first connector 71 than the bottom wall of the second chamber 16. The position detector 60 is located at a lower side of a periphery of the rotor assembly 203, that is, the position detector 60 is arranged closer to the valve body 40 than the stator assembly 20. The position detector 60 is used for detecting a revolution of the rotor assembly 203. Compared with the case that the position detector 60 is disposed at an upper side of the periphery of the rotor assembly 203, by disposing the position detector 60 at the lower side of the periphery of the rotor assembly 203, an overall height of the housing 10 can be reduced, and the detection precision of the position detector 60 can be improved.

The electric connection portion 70 includes the first connector 71 and the second connector 72. The first connector 71 includes a fixation portion 711, and the housing 10 includes a first matching portion 101. The fixation portion 711 and the first matching portion 101 are snapped with each other. The wall that forms the second chamber 16 includes at least a part of a wall of the first matching portion 101. The first matching portion 101 can limit a movement of the fixation portion 711 in the axial direction of the stator assembly 20. The housing 10 is provided with an insertion opening 712 that is in communication with the second chamber 16. An opening of the insertion opening 712 is arranged towards the electric control portion 30, and the first connector 71 can be snapped with the housing 10 in an opening direction of the insertion opening 712. The first connector 71 and the housing 10 are connected to each other by snapping, thereby achieving a relatively good stability of the connection thereof while facilitating of mounting and removing.

The housing 10 includes a first surface 101a, and the wall that forms the second chamber 16 includes the first surface 101a and a part of the wall of the first matching portion 101. The first matching portion 101 protrudes relative to the first surface 101a, and the fixation portion 711 is recessed relative to a wall of the first connector 71. A chamber formed in the fixation portion 711 is in communication with the first chamber 15 in the opening direction of the insertion opening 712, and at least a part of the first matching portion 101 is located in the chamber formed in the fixation portion 711. Alternatively, the first matching portion 101 is recessed relative to the first surface 101a, and the fixation portion 711 protrudes relative to the wall of the first connector 71. At least a part of the fixation portion 711 is located in a chamber formed in the first matching portion 101. The structures of the fixation portion 711 and the first matching portion 101 can not only position-limit but also facilitate of processing.

The fixation portion 711 is in clearance fit or in transition fit with the first matching portion 101. In the first direction, the fixation portion 711 and the first matching portion 101 are slidably fitted and snapped with each other. Herein, the "snapping" means that the first matching portion 101 can limit a movement of the fixation portion 711 in a direction other than a sliding direction of the first matching portion 101 and the fixation portion 711 relative to each other. The first connector 71 includes at least two fixation portions 711 that are respectively located on two opposite walls of the first connector 71, and the first matching portions 101 are also located on two opposite sides of the first surface 101a. In this case, with the at least two fixation portions 711, a contact area between the fixation portion 711 and the first matching portions 101 is enlarged to increase a friction between the fixation portion 711 and the first matching portion 101, thereby improving the mounting strength. Furthermore, multiple fixation portions 711 are provided, which can better cooperate with the first matching portion 101, thereby improving the mounting stability. The drawings of the embodiment only show a case in which the fixation portions 711 are recessed and the first matching portion 101 protrudes, and the cooperation manner may include but is not limited to the above cooperation manner in practice.

The housing 10 includes a second fixation portion 102 that protrudes relative to the matching portion 101 to form a limiting step 1021. The first connector 71 includes a second matching portion 713, and the second matching portion 713 and the second fixation portion 102 are snapped with each other. The second fixation portion 102 can limit a movement of the second matching portion 713 in the opening direction of the insertion opening 712. The first connector 71 includes a limiting wall 1021a, and the limiting wall 1021a is arranged farther away from the electric control portion 30 than the fixation portion 711. The opening direction of the insertion opening 712 is the snapping direction, and the limiting wall 1021a abuts against a wall of the limiting step 1021 to be limited. The second matching portion 713 and the second fixation portion 102 are snapped with each other, so that the first connector 102 can be limited in the opening direction of the insertion opening 712, thereby enhancing the mounting stability of the position detector 60, so as to improve the flow control precision.

When assembling the position detector 60, the electric connection portion 70 to which the position detector 60 is mounted is partially inserted into the second chamber 16. The fixation portions 711 and the first matching portion 101 cooperate with each other, and the first connector 71 is inserted into the second chamber 16 until the limiting wall 1021a of the first connector 71 abuts against the wall of the limiting step 1021, and thus the mounting is finished. The electric connection portion 70 is also limited in the opening direction of the insertion opening 712, thereby enhancing the mounting stability of the position detector 60, so as to improve the detection precision. In the embodiment, the position detector 60 is a position sensor, which employs a Hall sensor herein and can detect the revolution of the rotor assembly 203.

The position detector 60 includes a first pin portion 601 and a first positioning portion 602, and the first pin portion 601 is electrically connected to the second connector 72. The second connector 72 includes a first positioning hole 721. At least a part of the first positioning portion 602 is located in the first positioning hole 721, and the first positioning portion 602 is fixed to the second connector 72 by welding. The first connector 71 includes a second pin portion 714 and a second positioning portion 715, and the second pin portion 714 is electrically connected to the second connector 72. The second connector 72 includes a second positioning hole 722. At least a part of the second positioning portion 715 is located in the second positioning hole 722, and the second positioning portion 715 is fixed to the second connector 72 by welding. The first positioning portion 602 and the second positioning portion 715 extend through the second connector 72 to connect and fix the position detector 60 and the first connector 71 to the second connector 72, respectively, thereby improving the connection strength. In the embodiment, the first pin portion 601 and the second pin portion 714 are pins. The first positioning portion 602 is fixed to the second connector 72 by welding, and the second positioning portion 715 is fixed to the second connector 72 by welding. In other embodiments, the fixations may be achieved by other means, for example, by a conductive adhesive and the like so as to achieve an electrical connection.

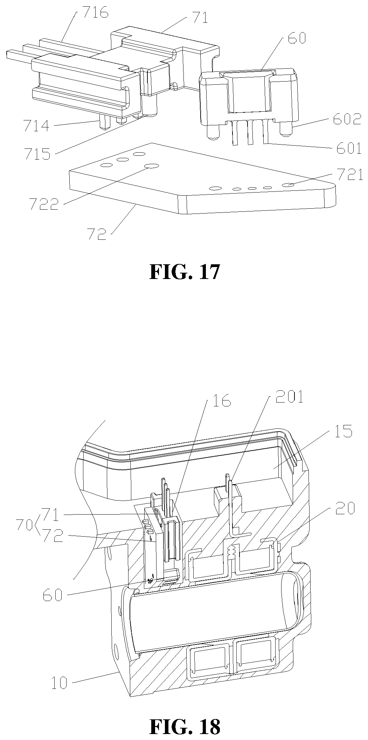

Referring to FIGs. 17, 18 and 22, the first connector 71 includes a third pin portion 716. At least a part of the third pin portion 716 is located in the first chamber 15, and the third pin portion 716 is electrically connected to the electric control portion 30. In addition, the stator assembly 20 includes a fourth pin portion 201, and a part of the fourth pin portion 201 extends through the housing 10. One end of the fourth pin portion 201 is electrically connected to the stator assembly 20, and the other end of the fourth pin portion 201 is electrically connected to the electric control portion 30. The electric valve 1 further includes an interface port portion 80, and the interface port portion 80 includes a fifth pin portion 81. One end of the fifth pin portion 81 is electrically connected to the electric control portion 30, and the other end of the fifth pin portion 81 is located on the interface port portion 80 to be electrically connected to the exterior. In the embodiment, the third pin portion 716, the fourth pin portion 201 and the fifth pin portion 81 are pins.

When mounting the position detector 60, the position detector 60, the first connector 71 and the second connector 72 are assembled in advance. That is, the first pin portion 601 is electrically connected and then fixed to the second connector 72, and the second pin portion 714 is electrically connected and then fixed to the second connector 72. The assembled components are fixed to the housing 10 by snapping, so as to ensure that the position detector 60 is located in the second chamber 16. Next is to assemble the electric control portion 30, and the connecting holes of the electric control portion 30 are aligned with the third pin portion 716, the fourth pin portion 201, and the fifth pin portion 81. The third pin portion 716, the fourth pin portion 201, and the fifth pin portion 81 are electrically connected and then fixed to the electric control portion 30. Next is to assemble the housing 10.

The position detector 60 is connected to the electric control portion 30 through the electric connection portion 70. In this way, the stability of the position detector 60 can be enhanced by snapping the position detector 60 and the housing 10, thereby improving the detection precision of the position detector 60. Moreover, the position detector 60 and the electric connection portion 70 are assembled in advance, and the electric connection portion 70 has a stable snapping structure. Therefore, a position of the third pin portion 716 is fixed, and the connection precision between the third pin portion 716 and the electric connection portion 30 can be improved when mounting the electric connection portion 30, thereby increasing the mounting efficiency of the position detector 60.

An assembly method for assembling an electric valve 1 is provided. The electric valve 1 includes a housing 10, a valve component 21, a valve body 40 and a first sensing device 50. The valve body 40 includes a first valve body 401 and a second valve body 402 that are separately formed. The second valve body 402 includes a first opening portion 42. The assembly method includes the following steps:
locate a part of the first sensing device 50 in the first opening portion 42, and fix the first sensing device 50 and the second valve body 402 to each other;
mount a part of the valve component 21 in a chamber of the housing 10, arrange the first valve body 401 on the valve component 21 in an axial direction thereof, and press the valve component 21 against the first valve body 401 and the housing 10 when fixing the positions of the housing 10 and the first valve body 401;
a sensor side of the second valve body 402 where the first sensing device 50 is mounted is arranged towards the housing 10. During assembling the second valve body 402 and the housing 10, another part of the first sensing device 50 is located in the housing 10, and the first sensing device 50 and an electric control portion 30 in the housing 10 are electrically connected to or in signal connection with each other.

The first valve body 401 and the second valve body 402 may be assembled in different directions. In assembly, the first sensing device 50 is mounted on the second valve body 402 first, and then the first valve body 401 and the second valve body 402 are mounted to the control portion 1a in sequence. It is not necessary to mount the first sensing device 50 to the valve body 40 from an electric control side, thereby simplifying the assembly process.

It should be noted that, the above embodiments are only used to illustrate the present application, and are not intended to limit the technical solutions described in the present application. Although the present application is described in this specification with reference to the above embodiments, it may be appreciated by those skilled in the art that, modifications or equivalent substitutions may be made to the present application by those skilled in the art, and all the technical solutions and improvements thereof without departing from the spirit and scope of the present application are deemed to fall into the scope of the present application defined by the claims.

## Claims

1. An electric valve (1), comprising a first sensing device (50), a valve body (40) and a valve component (21), wherein
the valve body (40) comprises a first valve body (401) and a second valve body (402) that are formed separately, and the first valve body (401) is connected to the second valve body (402) in a fixed or limited manner or abuts against the second valve body (402);
at least a part of the valve component (21) is located in the first valve body (401), the electric valve (1) comprises a housing (10), and at least another part of the valve component (21) is located in the housing (10);
the second valve body (402) is connected to the housing (10) in a fixed or limited manner, and the second valve body (402) comprises a first opening portion (42);
the first opening portion (42) is provided with a mounting chamber (423), an opening of the mounting chamber (423) is oriented towards the housing (10), and at least a part of the first sensing device (50) is located in the mounting chamber (423);
the electric valve (1) is provided with a first passage (41) and a second passage (214), the second passage (214) is located in the first valve body (401), and the first passage (41) is located in the second valve body (402); and
the first sensing device (50) is configured to detect a temperature and/or a pressure of a working medium in the first passage (41).

2. The electric valve (1) according to claim 1, wherein the first valve body (401) is made of materials comprising metal, and a density of the second valve body (402) is lower than a density of the first valve body (401).

3. The electric valve (1) according to claim 1 or 2, wherein the second valve body (402) is made of materials comprising plastic, and the second valve body (402) is formed by injection molding.

4. The electric valve (1) according to claim 3, wherein
the housing (10) is provided with a through hole portion (131), and the through hole portion (131) is provided with a through hole (131a); and
at least another part of the first sensing device (50) is located in the through hole (131a), and an included angle is formed between an axial direction of the first sensing device (50) and an axial direction of the valve component (21).

5. The electric valve (1) according to claim 4, comprising a first bolt (4023) and a third bolt (4025), wherein
the first bolt (4023) is arranged in a first direction, a part of the first bolt (4023) is located in a first hole of the housing (10), and an end portion of the first bolt (4023) is in a threaded connection with the second valve body (402) to fix the second valve body (402) relative to the housing (10), wherein the first direction is perpendicular to the axial direction of the valve component (21); and/or
the third bolt (4025) is arranged in the first direction or the axial direction of the valve component (21), a part of the third bolt (4025) is located in a second hole of the housing (10), and an end portion of the third bolt (4025) is in a threaded connection with the first valve body (401) to fix the first valve body (401) relative to the housing (10).

6. The electric valve (1) according to claim 5, wherein
the first valve body (401) comprises a first protrusion portion (403) that protrudes towards the second valve body (402) relative to other parts of the first valve body (401);
the second valve body (402) comprises a second protrusion portion (404) that protrudes towards the first valve body (401) relative to other parts of the second valve body (402); and
at least a part of the first protrusion portion (403) abuts against at least a part of the second valve body (402), and the second protrusion portion (404) limits the first protrusion portion (403) in a second direction, wherein the second direction is perpendicular to both the axial direction of the valve component (21) and the first direction.

7. The electric valve (1) according to claim 6, comprising a limiter (408) and a limiting groove (409), wherein
the limiter (408) and the limiting groove (409) are respectively located on a side of the first protrusion portion (403) and a side of the second protrusion portion (404) facing to each other; and
at least a part of the limiter (408) is located in the limiting groove (409), and the limiter (408) is configured to limit a relative position between the first protrusion portion (403) and the second protrusion portion (404) in the axial direction of the valve component (21), wherein
the limiting groove (409) is located on the first protrusion portion (403), the limiter (408) is connected to the second protrusion portion (404) in a fixed or limited manner or the limiter (408) is integrally formed on the second protrusion portion (404); or
the limiting groove (409) is located on the second protrusion portion (404), the limiter (408) is connected to the first protrusion portion (403) in a fixed or limited manner or the limiter (408) is integrally formed on the first protrusion portion (403).

8. The electric valve (1) according to claim 6 or 7, wherein the valve body (40) is provided with a weight reduction groove (407) that is located on a side of the first valve body (401) abutting against the housing (10), and the weight reduction groove (407) extends through the valve body (40) in the second direction.

9. The electric valve (1) according to any one of claims 4 to 8, comprising a stator assembly (20) and a control portion (1a), wherein
the stator assembly (20) is located in the housing (10), and the electric valve (1) is provided with a valve port (211);
the stator assembly (20) is configured to actuate at least a part of the valve component (21) to adjust an opening degree of the valve port (211); and
the stator assembly (20) is electrically connected to the control portion (1a) and/or in signal connection with the control portion (1a), and the first sensing device (50) is electrically connected to the control portion (1a) and/or in signal connection with the control portion (1a).

10. The electric valve (1) according to claim 9, comprising a first seal (51), wherein one side of the first seal (51) abuts against the housing (10), and the other side of the first seal (51) abuts against the first sensing device (50).

11. The electric valve (1) according to claim 9 or 10, comprising an electric control portion (30), a position detector (60) and an electric connection portion (70), wherein
the electric connection portion (70) comprises a first connector (71) and a second connector (72), and the first connector (71) is electrically connected to the electric control portion (30);
the second connector (72) is electrically connected to both the position detector (60) and the first connector (71), and the second connector (72) is connected to the first connector (71) in a fixed or limited manner; and
the first connector (71) comprises a first fixation portion (711), the housing (10) comprises a first matching portion (101), and the first fixation portion (711) and the first matching portion (101) are connected in a fixed or limited manner.

12. An assembly method for assembling an electric valve (1), wherein
the electric valve (1) comprises a housing (10), a valve component (21), a valve body (40), a first sensing device (50) and a control portion (1a), the valve body (40) comprises a first valve body (401) and a second valve body (402) that are formed separately, and the second valve body (402) comprises a first opening portion (42), wherein
the assembly method comprises the following steps:
disposing a part of the first sensing device (50) in a mounting chamber (423) of the first opening portion (42), and fixing the first sensing device (50) to the second valve body (402);
mounting a part of the valve component (21) in a chamber of the housing (10), locating the first valve body (401) on the valve component (21) in an axial direction of the valve component (21), fixing the housing (10) and the first valve body (401) to press the valve component (21) against the first valve body (401) and the housing (10); and
orienting a sensor side of the second valve body (402) on which the first sensing device (50) is mounted towards the housing (10), and assembling the second valve body (402) and the housing (10) so that another part of the first sensing device (50) is located in the housing (10), and the first sensing device (50) and the control portion (1a) are electrically connected to each other and/or in signal connection with each other.
